# EUROPEAN PATENT APPLICATION

(11) **EP 2 863 641 A1**
(43) Date of publication of application: **22.04.2015**
(21) Application number: 13188685.5
(22) Date of filing: 15.10.2013
(51) Int. Cl.: H04N 21/2343, H04N 21/262, H04N 21/81, H04N 21/845

(54) **Methods of enabling playback of content and device for playing back content**

(71) Applicant: TP Vision Holding B.V., 1097 JB Amsterdam (NL)
(72) Inventor: Piesing, Jonathan Richard, 1097 JB Amsterdam (NL)
(74) Representative: Busch, Patrick

(57) **Abstract**

The first method of the invention involves providing a content player configured to receive (1) on a device a file representing a content item, the file complying with a certain format and identifying a plurality of elements of said content item, to obtain (5) formatted data from an application running on said device, said formatted data complying with said certain format, and to playback (9) said plurality of items identified in said file. At least one of said elements is associated with a certain identifier and playing back said at least one of said elements involves processing said obtained formatted data. The second method of the invention involves the step of transmitting an application to a device, the application being programmed to receive a request from a content player running on said device and to provide formatted data complying with a certain format to said content player to allow said content player to process said obtained formatted data in order to playback a file complying with said certain format.

## Description

### FIELD OF THE INVENTION

The invention relates to methods of enabling play back of content.

The invention further relates to a device for playing back content.

### BACKGROUND OF THE INVENTION

There are a number of solutions in the field of HTTP adaptive streaming. One of these solutions is specified in the open standard called MPEG-DASH (ISO/IEC 23009-1). In all of these solutions, a file frequently called a Manifest (an MPD in MPEG-DASH) identifies different versions of a content item. Typically, these Manifests are a single file. Updates to the single file are handled by generating a new file in the network and the client device re-fetching the updated file. In the case of MPEG-DASH, there is also the possibility of "remote elements" where data that would normally be included in an MPD is instead included in a separate file in the network. A reference to this file (e.g. an HTTP URL) is included in the MPD and fetched by the DASH content player. This can be fetched either when the MPD is loaded or when the data in the separate file is needed.

A drawback of MPEG-DASH is that personalized advertisements require a different MPD for each user and this requires a lot of extra processing and storage in the network.

### SUMMARY OF THE INVENTION

It is a first object of the invention to provide a first method of enabling play back of content, which enables insertion of personalized advertisements in the content without requiring much processing and/or storage in the network.

It is a second object of the invention to provide a second method of enabling play back of content, which enables insertion of personalized advertisements in the content without requiring much processing and/or storage in the network.

It is a third object of the invention to provide a device for playing back content, which enables insertion of personalized advertisements in the content without requiring much processing and/or storage in the network.

According to the invention, the first object is realized in that the first method of enabling play back of content on a device comprises the step of providing a content player programmed to receive on a device a file representing a content item, the file complying with a certain format and identifying a plurality of elements of said content item, at least one of said elements, e.g. an advertisement, being associated with a certain identifier, obtain formatted data from an application running on said device, said formatted data complying with said certain format, and play back said plurality of items identified in said file, wherein playing back said at least one of said elements comprises processing said obtained formatted data.

By using an application running on the device, e.g. provided by the content provider, in order to obtain elements that would otherwise need to be obtained remotely (e.g. personalized advertisements), the amount of network resources that would otherwise be required in order to play back inserted personalized advertisements is significantly reduced.

In an embodiment, said at least one of said elements is further associated with a network address of a network device and playing back said at least one of said elements comprises processing said obtained formatted data (i.e. obtained from said application running on said device) instead of contacting said network address. In this embodiment, an identifier specified in a specification of said format that is normally meant to result in the element description being obtained remotely now results in said element description being obtained from the local application.

Said content player may further be programmed to determine whether said application has requested to receive call-backs from said content player and to only obtain formatted data from said application when said application has requested to receive call-backs from said content player. This allows remote elements to be retrieved normally when no local application is available on the device.

Said content player may be programmed to obtain formatted data from said application by sending a request to said application, said request comprising at least one of an identifier of said content item and an identifier of said at least one of said elements. A personalized advertisement can be inserted independent of the content being played back, but it may be beneficial to select an advertisement dependent on which content item is being played back and/or dependent on the position of the location of the advertisement in the content item (e.g. "advertisement 1" or "advertisement 5").

Said certain format may be the Media Presentation Description format specified in the MPEG-DASH standard. MPEG-DASH is an open standard for HTTP adaptive streaming and will likely become more popular than proprietary alternatives. In this case, the certain identifier may comprise an "XLINK" reference. The certain identifier may alternatively or additionally comprise a reference that is part of the URI, e.g. use of an "application://" reference instead of an "http://" reference. In the latter case, said application is contacted when the URI comprises "application://", but said network address of said network device is contacted when the URI comprises "http://". Said at least one of said elements may be at least one of a Period and a Segment as defined in said Media Presentation Description format. Preferably, the remote element is a Period, as this allows the application to identify components of multiple types (e.g. audio and video and subtitles) and of multiple qualities (e.g. HD and ultra HD video). Alternatively, the remote element may be a Segment.

According to the invention, the second object is realized in that the second method of enabling playback of content on a device comprises the step of transmitting an application to a device, the application being programmed to receive a request from a content player running on said device and provide formatted data complying with a certain format to said content player to allow said content player to process said obtained formatted data in order to playback a file complying with said certain format.

In an embodiment, said certain format is the Media Presentation Description format specified in the MPEG-DASH standard. Said at least one of said elements may be at least one of a Period and a Segment as defined in said Media Presentation Description format.

Said application may further be programmed to register itself to receive call-backs from said content player.

Said application may further be programmed to request server data from a server on the Internet, receive server data from said server in a second format in response to said request to said server and use said server data to create formatted data complying with said certain format. Since advertising servers that return a response in a second format (e.g. Digital Video Ad Serving Template) different from said certain format are common, it is advantageous to use these advertising servers. However, their responses cannot simply be used by the content player.

Said application may be programmed to create said formatted data in dependence on at least one of an identifier of said content item received as part of said request, an identifier of said at least one of said elements received as part of said request, and a user profile stored on said device. As an additional advantage of the invention, a user profile that is used to personalize advertisements, whose URIs can be included in said formatted data, only needs to be stored on the device and does not need to leave the device. Some users may not feel comfortable with their user profile leaving the device.

According to the invention, the third object is realized in that the device for playing back content comprises a receiver, a transmitter and a control unit configured to use said receiver to receive a file representing a content item, the file complying with a certain format and identifying a plurality of elements of said content item, at least one of said elements being associated with a certain identifier, to use said transmitter and receiver to obtain formatted data from an application running on said device, said formatted data complying with said certain format, and to play back said plurality of items identified in said file, wherein playing back said at least one of said elements comprises processing said obtained formatted data.

### BRIEF DESCRIPTION OF THE DRAWINGS

These and other aspects of the invention are apparent from and will be further elucidated, by way of example, with reference to the drawings, in which:
Fig.1 is a flow diagram of the steps performed by the content player provided in the first method of the invention;
Fig.2 is a flow diagram of the steps performed by the application transmitted in the second method of the invention;
Fig.3 is a block diagram of the device of the invention; and
Fig.4 is a diagram showing the basic principles of MPEG-DASH.

Corresponding elements in the drawings are denoted by the same reference numeral.

### DETAILED DESCRIPTION OF THE DRAWINGS

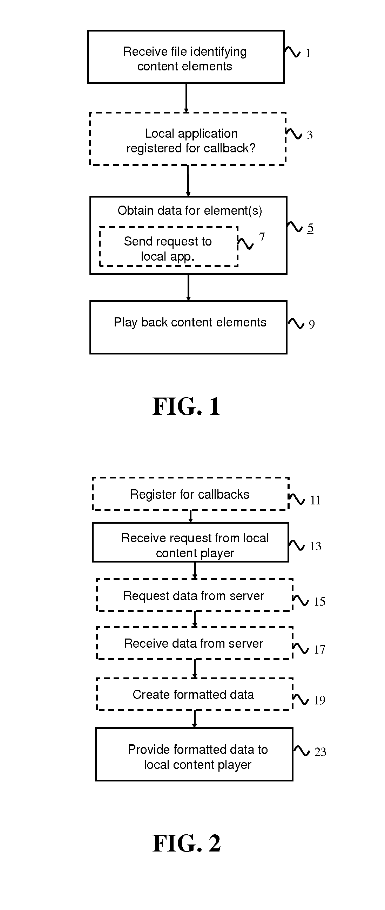

The first method of enabling playback of content comprises the step of providing a content player. As illustrated in Fig. 1, the content player is programmed to perform a step 1 of receiving on a device a file representing a content item, the file complying with a certain format and identifying a plurality of elements of said content item, a step 5 of obtaining formatted data from an application running on said device, said formatted data complying with said certain format, and a step 9 of playing back said plurality of items identified in said file. At least one of said elements is associated with a certain identifier. Playing back said at least one of said elements in step 9 comprises processing said obtained formatted data.

In an embodiment, a DASH player is started by said application, which passes an URI to an MPD file to the DASH player and registers to receive callback from the DASH player. The DASH player will then obtain the MPD file from this URI (e.g. using an HTTP GET command). Alternatively, said application may pass the MPD file itself to the DASH player. After receiving the MPD file, the DASH player will process the file. The DASH player will then obtain the video and audio date (e.g. using an HTTP GET command) and deliver it to the video and audio decoders.

When playback of the content approaches (e.g. 10 seconds before) an element associated with a certain identifier (e.g. a remote Period), the DASH player determines in a step 3 whether an application has requested to receive call-backs and generates a callback to the application in step 5 to obtain said formatted data if so. This step 5 may involve a step 7 of sending a request to said application, said request comprising at least one of an identifier of said content item and an identifier of said at least one of said elements.

The DASH player may identify content items with data to be obtained from said application by the presence of an "xlink" reference independent of the URI used with said reference. Alternatively said content player may identify content items with data to be obtained from said application by the presence of an "xlink" reference in combination with a specific URI, e.g. "application://".

The second method of enabling playback of content comprises the step of transmitting an application to a device. As illustrated in Fig. 2, the application is programmed to perform a step 13 of receiving a request from a content player running on said device and a step 23 of providing formatted data complying with a certain format to said content player to allow said content player to process said obtained formatted data in order to playback a file complying with said certain format. The application may be transmitted by an app store or as an HbbTV application via a broadcast channel, for example.

In an embodiment, the application first performs a step 11 of registering itself to receive call-backs from said content player, as previously described. As soon as the DASH player has generated the callback to the application in step 13, the application performs a step 15 of requesting server data from a server (e.g. an advertising server) on the Internet, a step 17 of receiving server data, e.g. URIs referring to advertisements, from said server in a second format in response to said request to said server and a step 19 of using said server data to create formatted data complying with said certain format. The request to the server may be an XMLHttpRequest, for example. The server may return a response in the VAST format (Digital Video Ad Serving Template), for example. The server may return a response that includes at least one identifier of a content item. Alternatively the server may return a response that includes URLs referring to one or more other servers and/or URIs referring to the same server from which at least one identifier of a content item should be obtained. Preferably, said formatted data is created in step 19 in dependence on at least one of an identifier of said content item received as part of said request, an identifier of said at least one of said elements received as part of said request, and a user profile stored on said device.

After the server data has been used to create formatted data complying with the MPEG DASH format (e.g. an MPD file comprising one or more URLs referring to advertisements), it is passed to the DASH player. The DASH player then obtains the video and audio referred to in the formatted data that was passed by the application at the specified location and delivers it to the video and audio decoders.

The DASH player may be integrated into the software of the TV set. Alternatively, the DASH player may be packaged with the application e.g. as a Javascript library.

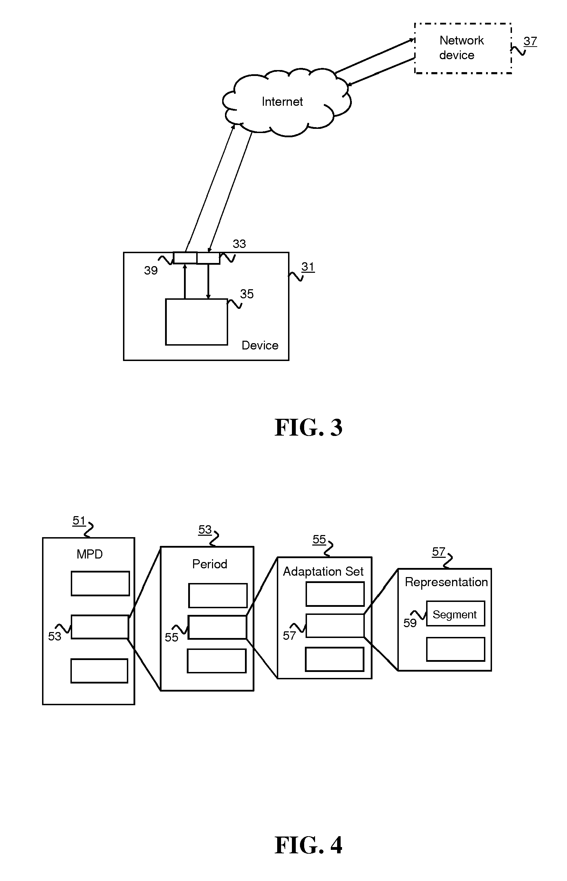

The device 31 for playing back content, see Fig. 3, comprises a receiver 33, a transmitter 39 and a control unit 35. The control unit 35 is configured to use said receiver 33 to receive a file representing a content item, the file complying with a certain format and identifying a plurality of elements of said content item, to use said transmitter 35 and receiver 33 to obtain formatted data from an application running on said device 31, said formatted data complying with said certain format, and to play back said plurality of items identified in said file. At least one of said elements is associated with a certain identifier. Playing back said at least one of said elements comprises processing said obtained formatted data.

In an embodiment, at least one of said elements is further associated with a network address of a network device 37 and playing back said at least one of said elements comprises processing said obtained formatted data instead of contacting said network address. In this embodiment, an identifier specified in a specification of said format that is normally meant to result in the element description being obtained remotely is now obtained from the local application.

The device 31 may be a TV or set top box (e.g. satellite or cable receiver), for example. If the device 31 is a TV, it comprises a display (not shown), e.g. an LCD, OLED or projection display. The receiver 33 may be a wired and/or a wireless receiver. The receiver 33 may be an Ethernet or WiFi (IEEE 802.11) receiver, for example. The control unit 35 may be a TV SoC or a general purpose processor, for example. The transmitter 39 may be a wired and/or a wireless transmitter. The transmitter 39 may be an Ethernet or WiFi (IEEE 802.11) transmitter, for example. The transmitter 39 and the receiver 33 may be the same hardware component. The network device 37 may be a server on the Internet, for example.

The basic principles of MPEG-DASH are shown in Fig. 4. The Media Presentation Description 51 comprises one or more periods 53. Periods 53 can be used for content splicing and advertisement insertion. For example, the first period 53 could represent the first five minutes of a TV program and the second period 53 could represent an advertisement. A period contains one or more adaptation sets 55. Each adaptation set 55 represents a component of a certain type, e.g. a first adaptation set 55 can represent a video component and a second adaptation set 55 can represent an audio component. Each adaptation set 55 contains one or more representations 57. Each representation 57 represents a different quality of the component, e.g. a HD version of a video component at 8 Mbits/sec and a HD version of a video component at 4 Mbits/sec. A representation 57 contains one or more segments 59. A segment 59 often contains an URL to the location where the actual content data can be obtained.

When the description of a period 53 or the description of a segment 59 in the received MPD specifies that a description of the period 53 or segment 59 can be obtained remotely from a network device (i.e. elements are embedded in the MPD with remote addressing using XLINK), instead of contacting the specified URI, which identifies the remote element, a description of the period 53 or segment 59 is obtained from a local application. Preferably, the description of an element is obtained just before play back of the element (by setting @xlink:actuate to "onRequest", which is the default state), but the description of an element can also be obtained on loading the MPD (by setting @xlink:actuate to "onLoad").

While the invention has been described in connection with preferred embodiments, it will be understood that modifications thereof within the principles outlined above will be evident to those skilled in the art, and thus the invention is not limited to the preferred embodiments but is intended to encompass such modifications. The invention resides in each and every novel characteristic feature and each and every combination of characteristic features. Reference numerals in the claims do not limit their protective scope. Use of the verb "to comprise" and its conjugations does not exclude the presence of elements other than those stated in the claims. Use of the article "a" or "an" preceding an element does not exclude the presence of a plurality of such elements.

'Means', as will be apparent to a person skilled in the art, are meant to include any hardware (such as separate or integrated circuits or electronic elements) or software (such as programs or parts of programs) which perform in operation or are designed to perform a specified function, be it solely or in conjunction with other functions, be it in isolation or in co-operation with other elements. The invention can be implemented by means of hardware comprising several distinct elements, and by means of a suitably programmed computer. The mere fact that certain measures are recited in mutually different dependent claims does not indicate that a combination of these measures cannot be used to advantage.

## Claims

1. A method of enabling play back of content on a device, the method comprising the step of providing a content player programmed to:
- receive (1) on a device a file representing a content item, the file complying with a certain format and identifying a plurality of elements of said content item, at least one of said elements being associated with a certain identifier;
- obtain (5) formatted data from an application running on said device, said formatted data complying with said certain format; and
- play back (9) said plurality of items identified in said file, wherein playing back said at least one of said elements comprises processing said obtained formatted data.

2. A method as claimed in claim 1, wherein said at least one of said elements is further associated with a network address of a network device and playing back (9) said at least one of said elements comprises processing said obtained formatted data instead of contacting said network address.

3. A method as claimed in any of claims 1 or 2, wherein said content player is further programmed to determine (3) whether said application has requested to receive call-backs from said content player and to only obtain (5) formatted data from said application when said application has requested to receive call-backs from said content player.

4. A method as claimed in any of claims 1 tor 3, wherein said content player is programmed to obtain (5) formatted data from said application by sending (7) a request to said application, said request comprising at least one of an identifier of said content item and an identifier of said at least one of said elements.

5. A method as claimed in any of claims 1 to 4, wherein said certain format is the Media Presentation Description format specified in the MPEG-DASH standard.

6. A method as claimed in claim 5, wherein said at least one of said elements is at least one of a Period and a Segment as defined in said Media Presentation Description format.

7. A method of enabling playback of content on a device, the method comprising the step of transmitting an application to a device, the application being programmed to:
receive (13) a request from a content player running on said device; and
provide (23) formatted data complying with a certain format to said content player to allow said content player to process said obtained formatted data in order to playback a file complying with said certain format.

8. A method as claimed in claim 7, wherein said certain format is the Media Presentation Description format specified in the MPEG-DASH standard.

9. A method as claimed in claim 8, wherein said at least one of said elements is at least one of a Period and a Segment as defined in said Media Presentation Description format.

10. A method as claimed in any of claims 7 to 9, wherein said application is further programmed to register (11) itself to receive call-backs from said content player.

11. A method as claimed in any of claims 7 to 10, wherein said application is further programmed to request (15) server data from a server on the Internet, receive (17) server data from said server in a second format in response to said request to said server and use said server data to create (19) formatted data complying with said certain format.

12. A method as claimed in any of claims 7 to 11, wherein said application is programmed to create (19) said formatted data in dependence on at least one of an identifier of said content item received as part of said request, an identifier of said at least one of said elements received as part of said request, and a user profile stored on said device.

13. A device (31) for playing back content, the device comprising:
- a receiver (33);
- a transmitter (39); and
- a control unit (35) configured:
to use said receiver (33) to receive a file representing a content item, the file complying with a certain format and identifying a plurality of elements of said content item, at least one of said elements being associated with a certain identifier,
to use said transmitter (35) and receiver (33) to obtain formatted data from an application running on said device (31), said formatted data complying with said certain format, and
to play back said plurality of items identified in said file, wherein playing back said at least one of said elements comprises processing said obtained formatted data.

14. A device as claimed in claim 13, wherein said at least one of said elements is further associated with a network address of a network device (37) and playing back said at least one of said elements comprises processing said obtained formatted data instead of contacting said network address.
